# EUROPÄISCHE PATENTSCHRIFT

(11) **EP 3 183 467 B1**
(45) Veröffentlichungstag und Bekanntmachung des Hinweises auf die Patenterteilung: **19.02.2020**
(21) Anmeldenummer: 15763499.9
(22) Anmeldetag: 12.08.2015
(51) Int. Cl.: F16F 1/38

(54) **AGGREGATLAGER-ANORDNUNG**
UNIT BEARING ASSEMBLY
AGENCEMENT DE SUPPORT DE GROUPE

(30) Priorität: 18.08.2014 DE 102014216326
(43) Veröffentlichungstag der Anmeldung: 28.06.2017
(73) Patentinhaber: BOGE Elastmetall GmbH, 49401 Damme (DE)
(72) Erfinder: SCHARF, Jörg, 65558 Eppenrod (DE); MARKTSCHEFFEL, Julia, 38102 Braunschweig (DE); GEISLER, Bernd, 38536 Meinersen (DE)
(74) Vertreter: Bossmeyer, Jörg Peter
(86) Internationale Anmeldenummer: PCT/EP2015/068535
(87) Internationale Veröffentlichungsnummer: WO 2016/026745

(56) Entgegenhaltungen:
- DE-A1-102012 106 064
- DE-A1-102012 110 480
- DE-U1-202013 102 202
- FR-A1- 2 945 093

## Beschreibung

Die Erfindung betrifft eine Aggregatlager-Anordnung nach dem Oberbegriff des Patentanspruchs 1.

Derartige Aggregatlager-Anordnungen sind bekannt und dienen zur Begrenzung von durch den Motor verursachten Bewegungen, die über ein Stützglied an den Lagerkörper der Anordnung übertragen werden, an dessen Anlenkungen an der Karosserie die auftretenden Kräfte abgeleitet werden. Sie werden gerade in der Kraftfahrzeugtechnik insbesondere zur Lagerung des Getriebes in großen Stückzahlen eingesetzt. Einfache Ausführungsformen derartiger Lager bestehen im Wesentlichen aus einem elastomeren Lagerkörper und einem starren Lagergehäuse, welches den Lagerkörper umgibt und ihn aufnimmt. Dabei führen bei einem bestimmungsgemäßem Einsatz der Lager die jeweiligen Lagerkörper beim Betrieb eines mit ihnen ausgestatteten Fahrzeugs aufgrund der auftretenden Belastungen innerhalb des Lagergehäuses Bewegungen relativ zum Lagergehäuse aus. Diese Relativbewegungen des Lagerkörpers müssen dabei hinsichtlich des in den unterschiedlichen Richtungen jeweils ermöglichten Weges begrenzt werden, weswegen die Lager mit Anschlägen ausgestattet sind, welche durch das Lagergehäuse aufgrund einer entsprechenden Formgebung des Gehäuses oder aber zumindest an dem Lagergehäuse mittels entsprechender zusätzlicher Elemente ausgebildet werden.

Für den Einsatz in der Kraftfahrzeugtechnik sind Anschläge für die Relativbewegungen des Lagerkörpers in den drei Hauptbelastungsrichtungen erforderlich. Diese Anschläge begrenzen die Bewegung des Lagerkörpers in der X-Richtung, das heißt in der Fahrzeuglängsrichtung beziehungsweise bezogen auf die Fahrtrichtung, in der Y-Richtung, das heißt quer zur Fahrzeuglängsrichtung beziehungsweise zur Fahrtrichtung, sowie in der Z-Richtung, das heißt im Hinblick auf die vertikale Erstreckung des Fahrzeugs, jeweils sowohl bezüglich des jeweiligen positiven als auch der korrespondierenden negativen Komponente des entsprechenden Richtungsvektors.

Nach dem Stand der Technik ist es üblich, die Lagergehäuse zur Realisierung entsprechender Anschläge entweder mehrteilig auszubilden oder für zumindest eine Bewegungsrichtung des Lagerkörpers eine externe Fläche am Einbauort des Lagers als Anschlag zu verwenden. In jedem Falle erfolgt hierbei die abschließende Montage des Lagers, nämlich das Einfügen des Lagerkörpers in das Lagergehäuse, im Zusammenhang mit dem Einbau des Lagers am Einbauort. Im zuvor erstgenannten Fall werden dabei beim Einbau des Aggregatlagers dessen Gehäuseteile unter Aufnahme des Lagerkörpers mittels Befestigungselementen, vorzugsweise Schrauben, über welche das Lager am Einbauort befestigt wird, zusammengefügt.

Im Stand der Technik findet man hierzu Lösungen, etwa in der DE 10 2010 043 165 A1, die auf aus mehreren Teilen zusammengesetzte Lagergehäuse setzen, um die von dem einen Stützglied an den Lagerkörper übertragenen Bewegungen in den drei Raumrichtungen zu begrenzen. Beim Zusammensetzen der mehreren Teile des Lagergehäuses ist dabei mindestens ein Füge- oder Montageprozess durchzuführen, um Bewegungen von an dem Stützglied angeordneten Dämpfungselementen in drei Raumrichtungen zu begrenzen. DE 10 2012 110 480 A1 offenbart eine gattungsgemäße Aggregatlager-Anordnung.

Es ist daher die Aufgabe der vorliegenden Erfindung, eine Aggregatlager-Anordnung mit einem stabilen, robusten und maßhaltigen Lagergehäuse zur Verfügung zu stellen, welches eine hohe Duktilität aufweist und einem darin eingreifenden Stützglied Anschläge für Bewegungen in drei Raumrichtungen bietet.

Das Problem wird gelöst durch eine Aggregatlager-Anordnung mit einem elastomeren Lagerkörper, welcher in einem zumindest an einer Seite mit einer Öffnung versehenen, starren Lagergehäuse aufgenommen ist, wobei durch die zumindest eine Öffnung wenigstens ein mit einem Aggregat verbundenes Stützglied greift, welches sich an dem Lagerkörper gegen das Lagergehäuse abstützt, wobei durch Beaufschlagung der Anordnung verursachte Relativbewegungen des Lagerkörpers gegenüber dem Lagergehäuse entlang von drei zueinander orthogonalen Erstreckungsrichtungen des Lagerkörpers beidseits einer Ruhelage der jeweiligen Relativbewegung durch an dem Lagergehäuse angeordnete Anschläge begrenzbar sind, wobei das Lagergehäuse fügefrei ausgebildet ist und in einem Umformprozess einteilig zur Aufnahme des Lagerkörpers formbar oder gebildet ist, wobei das Stützglied einen U-förmigen Abschnitt aufweist, dessen Schenkel in Ruhelage einer der Bewegungsrichtungen beidseits eines den Anschlag für diese Bewegungsrichtung bildenden Flächenabschnitts des Lagergehäuses angeordnet sind, und wobei der Anschlag zur Begrenzung der Bewegung in der einen Bewegungsrichtung an dem Lagergehäuse aus Richtung des Aggregats gesehen in der einen Bewegungsrichtung vor dem Lagerkörper angeordnet ist, also mit einer Anordnung entsprechend den Merkmalen des Patentanspruchs 1. Ein wesentlicher Aspekt besteht darin, dass ein in einem Umformprozess gebildetes Lagergehäuse, beispielsweise ein gezogener Topf, die Basis der Aggregatlager-Anordnung bildet. Aufgrund der echten, also nicht nachträglich gefügten Einteiligkeit erfüllt dieses Lagergehäuse die Anforderungen an Stabilität und Robustheit. Gleichzeitig sind an dem erwähnten, aus einem Stück bestehenden Topf alle Funktionsmaße und Begrenzungen für die Gummimetallteile ausbildbar, die an dem Stützglied bzw. dem Lagerkörper die Anschläge der Bewegungen bilden. Dies ist möglich durch das Zusammenspiel der Funktionsflächen von Stützglied und Gehäusetopf.

Hierdurch ist es im Prinzip also möglich, etwa ein voll funktionierendes Getriebelager mit Wegbegrenzungen in alle Richtungen mit nur zwei Metallbauteilen herzustellen. Jegliche anderen Anbauteile dienen dabei einer weiteren Festigkeitserhöhung oder entspringen dem Bedürfnis, weitere Anbauteile oder Befestigungen zur Verfügung zu stellen, wobei ein späteres Anordnen von weiteren Bauteilen, etwa durch Anschweißen, an der einmal bereit gestellten Geometrie des Gehäusetopfes nichts mehr ändert. Der wesentliche Unterschied zum Stand der Technik besteht dabei darin, dass das Lagergehäuse aus einem einzigen Bauteil eines Fertigungsprozesses entsteht und alle für die Dämpfungsfunktion relevanten Funktionen bietet. Dabei kann ein gezogener und ggf. in einem Folge-Verbundwerkzeug anschließend gestanzter Topf nach seiner Erstellung bereits alle für die Funktion notwendigen Funktionsflächen bieten.

Vorteilhafte Aus- beziehungsweise Weiterbildungen dieser Aggregatlager-Anordnung sind durch die Unteransprüche gegeben.

In einer vorteilhaften, da mit geringem Aufwand herstellbaren Ausführung der erfindungsgemäßen Aggregatlager-Anordnung bildet etwa das Lagergehäuse im Wesentlichen ein einen Durchgriff bildendes Hohlprofil mit zwei gegenüberliegenden Öffnungen, die insbesondere einen gleichen Querschnitt aufweisen und zwischen welchen sich eine Gehäusewand des Lagergehäuses als Zarge erstreckt, die den Durchgriff einfasst.

Eine andere vorteilhafte Ausführungsform der Aggregatlager-Anordnung, die eine verbesserte Handhabung aufweist, bringt die zu bildenden Funktionsflächen des Lagergehäuses bereits mit, diese müssen also nicht nachträglich mit dem Gehäuseteil verbunden werden. Dabei ist an zumindest einer der Öffnungen des Lagergehäuses zumindest ein Randbereich als wenigstens ein Flächenabschnitt ausgebildet, der gegenüber der Zarge des Lagergehäuses an dieser angelenkt wenigstens bereichsweise ein- oder mehrfach dauerhaft verschwenkbar ist. Der betreffende Randbereich ist dabei ein Abschnitt, der Teil des Gefüges desjenigen Teiles ist, aus dem zuvor der Topf gebildet worden ist. Die Funktionsflächen gehören dabei also zu derselben Struktur wie das Gehäuseteil. Mit Blick auf die als Anschläge ausgebildeten Funktionsflächen des Topfes kann beispielsweise die Zarge des Lagergehäuses mit zwei gegenüberliegenden Abschnitten ihrer Innenseite einen Anschlag für die Z-Richtung bilden. Andererseits kann ein Anschlag für die Y-Richtung durch einen ein- oder mehrfach gefalteten Flächenabschnitt gebildet sein, der sich quer zur Gehäusewand des Lagergehäuses erstreckend in dessen Eintrittsöffnung ragt. Mit Blick auf den Umformprozess bildete dieser Flächenabschnitt zuvor zumindest einen Bereich des Topfbodens und ragt nun in Gebrauchsstellung quer zum Öffnungsrand in Richtung des Stützglieds, um dort in einen Abschnitt mit einer Nut einzugreifen.

In zweckmäßigen Weiterbildungen der erfindungsgemäßen Aggregatlager-Anordnung kann der wenigstens eine Flächenabschnitt als Teil eines Festlegemittels des Lagergehäuses oder als Anschlag des Stützglieds an dem Lagergehäuse ausgebildet sein, so dass die Aggregatlager-Anordnung mit Hilfe eines Flächenabschnitts in zweckmäßiger Weise einfach und sicher an der Karosserie festgelegt werden kann oder selbst eine Funktionsfläche zur Begrenzung von Bewegungen entlang einer Erstreckungsrichtung bildet.

Bei einer anderen Ausführungsform der Aggregatlager-Anordnung kann die Verwindungssteifigkeit des als Topf ausgebildeten Lagergehäuses verbessert werden, indem dem Lagergehäuse zumindest ein insbesondere U-förmiges Steckteil zugeordnet wird, das mit seiner Basis und seinen Schenkeln in Gebrauchsstellung an drei Seiten des Lagergehäuses zumindest über einen Teil der jeweiligen Seitenlänge anliegt. Das Steckteil kann dabei beispielsweise als im Wesentlichen zweidimensionales Stanzblech ausgebildet sein.

In einer zweckmäßigen Weiterbildung kann dabei wenigstens eine Seitenfläche des Steckteils eine Stirnfläche eines der an dem Lagergehäuse verschwenkten Flächenabschnitte des Lagergehäuses abstützen, so dass der betreffende Flächenabschnitt, etwa an einem Karosserieteil verschraubt, eine gute Krafteinleitung der aufgenommenen Kräfte gewährleistet.

Bei einer vorteilhaften Ausführungsform der Aggregatlager-Anordnung, die in der Lage ist, die bei der Beaufschlagung auf das Aggregat wirkenden Kräfte über das Stützglied schnell und effektiv abzuleiten, greift das Stützglied mit einer Steckrichtung entlang der Längsachse des Durchgriffs des Lagergehäuses in dieses ein.

Um das Ende des Stützglieds bei einer vorteilhaften Ausführung der Aggregatlager-Anordnung in geeigneter Weise an dem Lagerkörper anzuordnen und eine sichere Krafteinleitung sicherzustellen, kann das Stützglied an seinem dem Lagerkörper zugewandten Ende ein Profil aufweisen, das den Lagerkörper an zumindest drei Seiten angreift, wobei eine mittlere dieser Seiten entlang ihrer Erstreckungsrichtung vollständig übergriffen ist. Beispielsweise kann der Lagerkörper hierbei ein sechsflächiger Polyeder sein, dessen eine Fläche von dem Profil des Stützgliedendes vollständig eingefasst ist, wobei an den Rändern der eingefassten Fläche das Profil auch noch an den angrenzenden Seitenflächen mehr oder minder weit angreift, so dass der Lagerkörper wie in eine Art Ausnehmung des Profils eingreift.

Erfindungsgemäß weist das Stützglied einen U-förmigen Abschnitt auf, dessen Schenkel in Ruhelage einer der Bewegungsrichtungen beidseits eines einen Anschlag für diese Bewegungsrichtung bildenden Flächenabschnitts des Lagergehäuses angeordnet sind. Der U-förmige Abschnitt bildet also eine Nut, deren Seitenwände bei Auslenkung des Stützglieds aus der Ruhelage in der betreffenden Bewegungsrichtung mit dem Flächenabschnitt zumindest mittelbar in Anlage geraten, wodurch der Flächenabschnitt einen Anschlag für die Bewegung entlang dieser Richtung bietet. Dies kann zum Beispiel die weiter oben beschriebene Y-Richtung sein.

Hinsichtlich der von dem Stützglied auf den Lagerkörper bzw. das Lagergehäuse übertragenen Momente kann es bei einer anderen Ausführung der Aggregatlager-Anordnung vorteilhaft sein, wenn mehrere Anschläge zur Begrenzung der Bewegung an dem Lagergehäuse aus Richtung des Aggregats gesehen vor dem Lagerkörper angeordnet sind, so dass der betreffende Hebelarm kleiner ausgebildet ist.

Um den Lagerkörper an dem Lagergehäuse sicher positionieren zu können, kann es bei einer anderen Ausführung an der Zarge des Lagergehäuses zumindest eine Öffnung vorgesehen sein, in die ein mit dem Lagerkörper verbundenes Befestigungselement zumindest eingreift. So ist in Gebrauchsstellung gewährleistet, dass die Tragfeder ihre korrekte Position in dem Lagergehäuse einnimmt. Das Befestigungselement kann die Öffnung aber auch vollständig durchgreifen.

In anderen vorteilhaften Weiterbildungen kann bei der Aggregatlager-Anordnung das Lagergehäuse insbesondere aus tiefgezogenem Stahlblech bestehen, aber auch aus einem Aluminiumstrangpressprofil geformt sein, wodurch es die erforderliche Duktilität aufweist, um in geeigneter Weise zur Lagerung etwa eines Kraftfahrzeuggetriebes ausgebildet zu sein.

Die Erfindung wird nachstehend anhand von Ausführungsbeispielen in der Zeichnung näher beschrieben. In teilweise schematisierter Darstellung zeigen hierbei die
- Fig.1: eine geschnittene ebene, Seitenansicht eines ersten Ausführungsbeispiels der erfindungsgemäßen Aggregatlager-Anordnung mit Lagerkörper, Lagergehäuse und Stützglied;
- Fig. 2: eine teilgeschnittene perspektivische Seitenansicht der Aggregatlager-Anordnung aus der Fig. 1 schräg von oben;
- Fig. 3: eine schnittfreie perspektivische Seitenansicht der Aggregatlager-Anordnung aus der Fig. 2;
- Fig. 4: eine perspektivische Seitenansicht der Aggregatlager-Anordnung aus den Fig. 1 bis 3 aus rückwärtiger Richtung;
- Fig. 5: eine stirnseitige, perspektivische Ansicht der Aggregatlager-Anordnung aus den Fig. 1 bis 4 von vorne unten;
- Fig. 6: eine perspektivische Seitenansicht schräg von vorne rechts eines Lagergehäuse einer Aggregatlager-Anordnung von vorne mit unverschwenkten Flächenabschnitten;
- Fig. 7: eine perspektivische Seitenansicht schräg von vorne links des Lagergehäuses aus der Fig. 6 mit verschwenkten Flächenabschnitten;
- Fig. 8: eine perspektivische Seitenansicht schräg von hinten rechts des Lagergehäuses aus der Fig. 7;
- Fig. 9.: eine perspektivische Seitenansicht schräg von unten eines Ausführungsbeispiels der Aggregatlager-Anordnung mit zusätzlichem Befestigungsmittel zwischen dem Lagerkörper und dem Lagergehäuse.

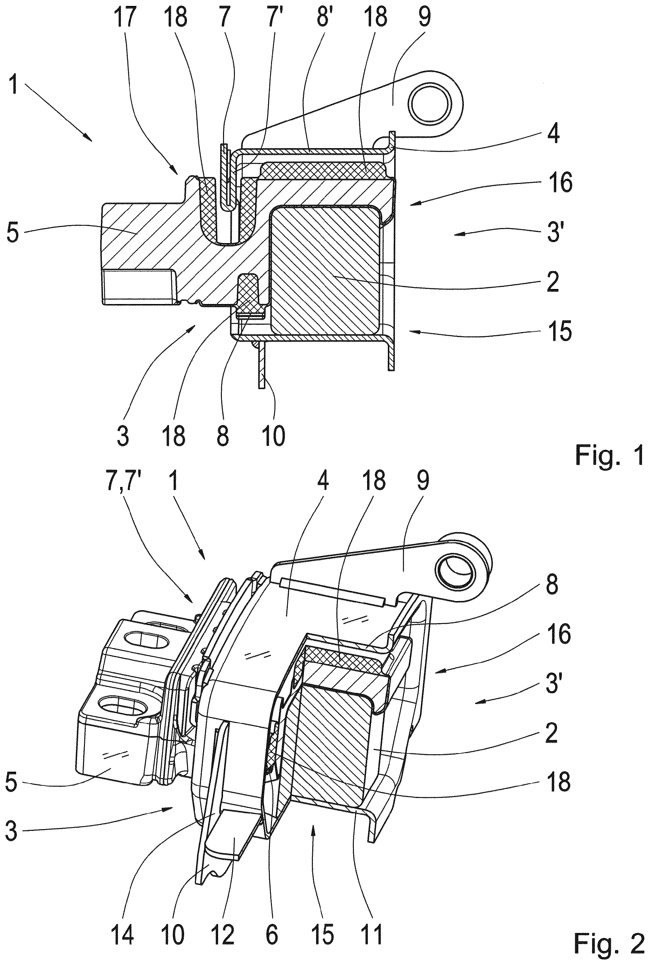

In den Fig. 1 bis 5 und 9 erkennt man eine im Ganzen mit 1 bezeichnete Aggregatlager-Anordnung mit einem elastomeren Lagerkörper 2, der in einem zumindest an einer Seite mit einer Öffnung 3 versehenen, starren Lagergehäuse 4 aufgenommen ist, durch welche Öffnung 3 ein mit dem betreffenden, nicht dargestellten Aggregat verbundenes Stützglied 5 greift. Das Stützglied 5 stützt sich an dem Lagerkörper 2 gegen das Lagergehäuse 4 ab. Die durch Beaufschlagung der Anordnung verursachten Relativbewegungen des Lagerkörpers 2 gegenüber dem Lagergehäuse 4 entlang von drei zueinander orthogonalen Erstreckungsrichtungen X,Y,Z des Lagerkörpers 2 beidseits einer Ruhelage der jeweiligen Relativbewegung sind durch an dem Lagergehäuse angeordnete Anschläge 6, 6', 7, 7', 8, 8' begrenzbar. Die Aggregatlager-Anordnung zeichnet sich gegenüber aus dem Stand der Technik bekannten dadurch aus, dass das Lagergehäuse 4 fügefrei ausgebildet ist und in einem Umformprozess einteilig zur Aufnahme des Lagerkörpers 2 formbar ist.

Gut zu erkennen ist dabei, dass der Lagerkörper 2 einen viereckigen Querschnitt aufweist und in einem Durchgriff 15 aufgenommen ist, den das Lagergehäuse 4 mit seiner Gehäusewand 11, die sich zwischen den beiden einander gegenüberliegenden Öffnungen 3, 3' erstreckt, bildet. Der Durchgriff 15 wird dabei von der Gehäusewand 11 des Lagergehäuses 4 eingefasst.

Weiter erkennt man, dass an der Öffnung 3' des Lagergehäuses 4, die dem Betrachter in den Fig. 2, 3, 5 und 9 zugewandt ist, ein Randbereich mit mehreren Flächenabschnitten 12, 12' ausgebildet ist, der gegenüber der Gehäusewand 11 des Lagergehäuses 4 an dieser angelenkt und bereichsweise dauerhaft verschwenkbar bzw. verschwenkt ist. In diesem Fall bilden die Flächenabschnitte 12, 12' einen Teil eines Festlegemittels des Lagergehäuses 4, da an den an ihnen vorgesehenen Befestigungsöffnungen 13 jeweils eine Schraubverbindung mit einem Karosserieteil hergestellt werden kann. Das erwähnte Festlegemittel wird vervollständigt durch den an der Außenseite des Lagergehäuses befindlichen Anlenkarm 9, so dass das Lagergehäuse 4 an drei unterschiedlichen Punkten mit Karosserieteilen verbindbar ist.

Ein anderer verschwenkter, quasi gefalteter Flächenabschnitt ist durch den Y-Anschlag 7, 7' gebildet, der bei dem Umformprozess des Lagergehäuses 4 bereichsweise den Topfboden gebildet hatte.

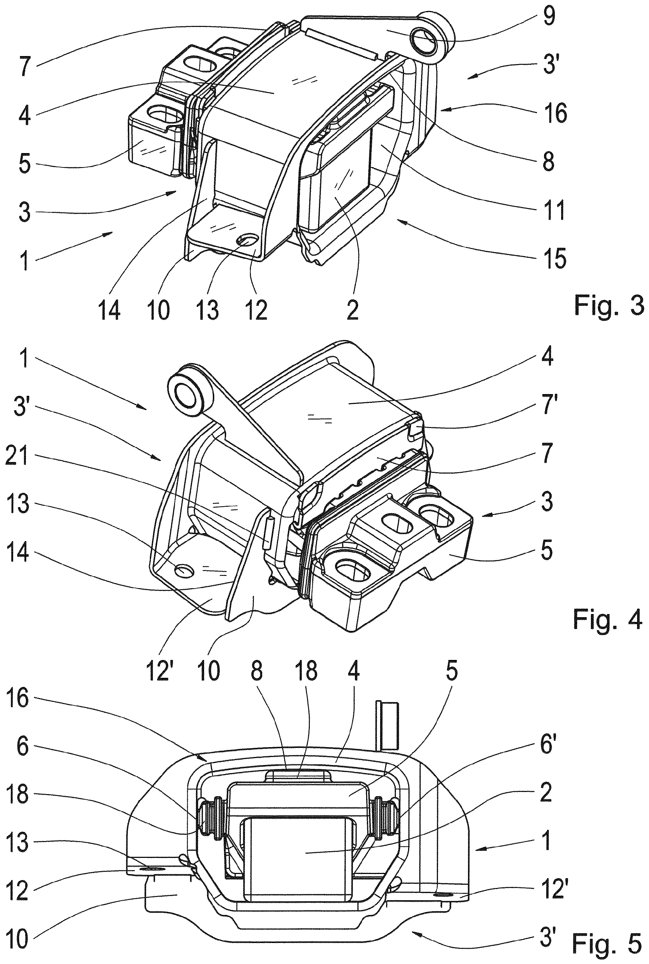

In den Fig. 2 bis 5 und 9 erkennt man auch ein U-förmiges Steckteil 10, das dem Lagergehäuse 4 zu- und an diesem angeordnet ist und das mit seiner Basis und seinen Schenkeln in Gebrauchsstellung an drei Seiten des Lagergehäuses 4 über einen Teil der jeweiligen Seitenlänge anliegt. Mit seiner nach vorn weisenden Seitenfläche 14 stützt das Steckteil 10 jeweils eine Stirnfläche eines der verschwenkten Flächenabschnitte 12, 12' des Lagergehäuses 4 ab und unterstützt so die Krafteinleitung über die Flächenabschnitte 12, 12' durch Versteifung von deren Konstruktion. Dabei erkennt man in der Fig. 4, dass die Rückseite der Seitenfläche 14 sich gegen einen an der äußeren Gehäusewand 11 befindlichen, quer zur Längsachse des Durchgriffs 15 vertikal erstreckenden Vorsprung 21 abstützt.

In den Fig. 1 bis 5 und 9 erkennt man, dass das Stützglied 5 mit einer Steckrichtung entlang der Längsachse des Durchgriffs 15 des Lagergehäuses 4 in dieses eingreift. Ebenfalls gut erkennbar ist, dass das Stützglied 5 an seinem dem Lagerkörper 2 zugewandten Ende ein Profil 16 aufweist, das den Lagerkörper 2 an zumindest drei Seiten angreift, wobei eine mittlere dieser Seiten entlang ihrer Erstreckungsrichtung vollständig übergriffen ist. Zur Fig. 1 zurückkehrend ist lediglich in dieser dargestellt, dass das Stützglied 5 einen U-förmigen Abschnitt 17 aufweist, dessen Schenkel in Ruhelage einer der Bewegungsrichtungen, nämlich die Y-Richtung, beidseits des einen Anschlag 7, 7' für diese Bewegungsrichtung bildenden Flächenabschnitts des Lagergehäuses 4 angeordnet sind.

Insgesamt erkennt man hinsichtlich der Anschläge 6, 6', 7, 7', 8, 8', dass diese bei Auslenkung des Stützglieds aus seiner Ruhelage von an dieser entsprechend positionierten Elastomerabschnitten 18, die über Gummi-Metall-Verbindungen mit dem Stützglied 5 verbunden sind, kontaktiert werden, und die bei entsprechend starker Auslenkung in Anlage mit dem durch Flächenabschnitte oder Bereiche der Gehäusewand 11 gebildeten Anschlägen 6, 6', 7, 7', 8, 8' geraten. Dieser Umstand ist besonders gut den Fig. 1, 2 und 5 zu entnehmen. In der Darstellung der Fig. 5 sieht man dabei insbesondere deutlich die betreffenden Elastomerabschnitte 18 hinsichtlich der Anschläge 6, 6' bezüglich der X-Richtung. In der Fig. 1 erkennt man auch noch, dass mehrere Anschläge 7, 7', 8 zur Begrenzung der Bewegung an dem Lagergehäuse 4 aus Richtung des Aggregats gesehen vor dem Lagerkörper 2 angeordnet sind.

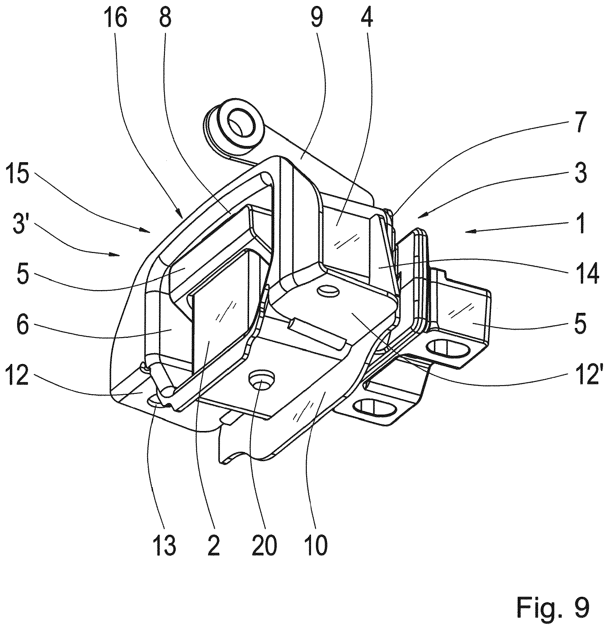

Nur in der Fig. 9 erkennt man ein Ausführungsbeispiel der Aggregatlager-Anordnung, bei dem in die Gehäusewand 11 des Lagergehäuses 4 eine Wandöffnung 20 eingebracht ist, die von einem mit dem Lagerkörper 2 verbundenen Befestigungselement durchgriffen ist, so dass der Lagerkörper bezüglich des Lagergehäuses 4 korrekt positioniert ist.

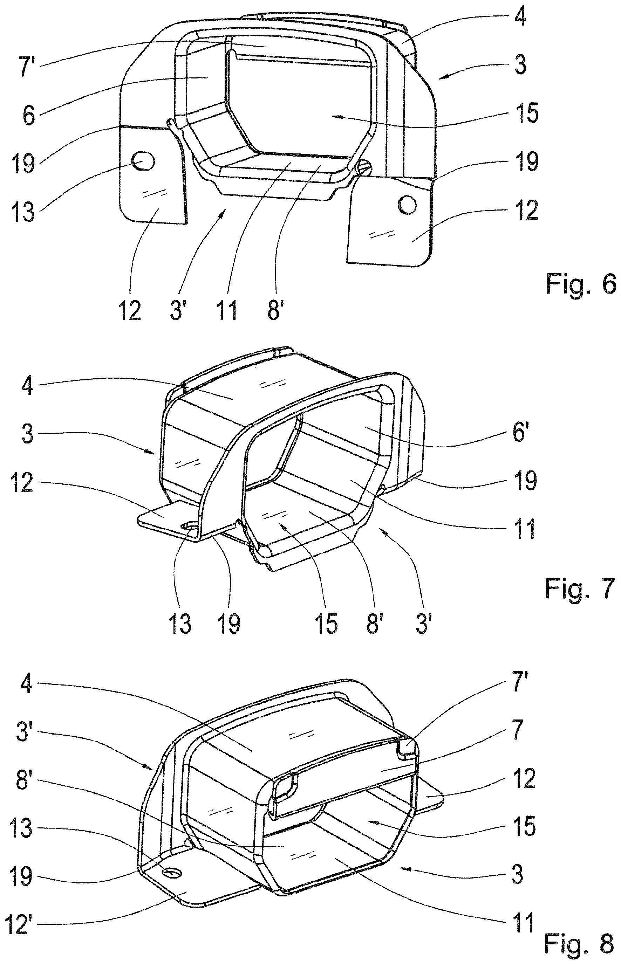

Lediglich das topfartige Lagergehäuse 4 ist in den Fig. 6 bis 8 gezeigt, bei dem ein Durchgriff 15 gebildet ist, der sich zwischen den Öffnungen 3, 3' des Lagergehäuses 4 erstreckt und von der Gehäusewand 11 eingefasst ist. Am Rand der Öffnung 3' erkennt man dabei weiter, dass Randbereiche quer von diesem nach außen abstehen, deren in der Fig. 6 für den Betrachter untere Bereiche jeweils um eine Schwenknaht 19 verschwenkbar sind, um dann die Flächenabschnitte 12, 12' mit den Befestigungsöffnungen 13 zu bilden, wie man in der Fig. 7 erkennt. Besonders gut ist in den Fig. 6 bis 8 zu sehen, wie der Durchgriffsquerschnitt des topfartigen Lagergehäuses 4 beschaffen ist, der bezugnehmend auf die Fig. 6 einen leicht nach außen gekrümmten Dachbereich aufweist, der an abgerundeten Ecken in gerade Seitenabschnitte übergeht, die sich an ihrem unteren Ende aufeinander zu leicht verjüngen, um dann wiederum abgerundet in einem ebenen Bodenbereich zu enden. In der Fig. 8 erkennt man insbesondere nochmals den Anschlag 7, 7', der aus einem Bereich des ehemaligen Bodens des gezogenen Topfes, aus dem das Lagergehäuse 4 entstanden ist, gebildet ist. Der Abschnitt des Anschlags 7 ist dabei um 180° nach oben verschwenkt und bildete zuvor den Bodenbereich in etwa bis zu der Höhe, an dem sich der Querschnitt des Lagergehäuses 4 verjüngt.

Demnach betrifft die vorstehend beschriebene Erfindung also eine Aggregatlager-Anordnung 1 mit einem elastomeren Lagerkörper 2, der in einem zumindest an einer Seite mit einer Öffnung 3, 3' versehenen, starren Lagergehäuse 4 aufgenommen ist. Durch die zumindest eine Öffnung 3, 3' greift wenigstens ein Stützglied 5, welches sich an dem Lagerkörper 2 gegen das Lagergehäuse 4 abstützt, und die durch Beaufschlagung der Anordnung verursachten Relativbewegungen des Lagerkörpers 2 gegenüber dem Lagergehäuse 4 entlang von drei zueinander orthogonalen Erstreckungsrichtungen X, Y, Z des Lagerkörpers 2 beidseits einer Ruhelage der jeweiligen Relativbewegung sind durch an dem Lagergehäuse 4 angeordnete Anschläge 6, 6', 7, 7', 8, 8' begrenzbar. Um hierbei eine Aggregatlager-Anordnung 1 mit einem stabilen, robusten und maßhaltigen Lagergehäuse 4 zur Verfügung zu haben, welches eine hohe Duktilität aufweist und einem darin eingreifenden Stützglied 5 Anschläge 6, 6', 7, 7', 8, 8' für Bewegungen in drei Raumrichtungen X, Y, Z bietet, ist das Lagergehäuse 4 fügefrei ausgebildet und in einem Umformprozess einteilig zur Aufnahme des Lagerkörpers 2 formbar.

### Bezugszeichen

- 1: Aggregatlager-Anordnung
- 2: Lagerkörper
- 3, 3': Öffnung
- 4: Lagergehäuse
- 5: Stützglied
- 6, 6': Anschlag X-Richtung
- 7, 7': Anschlag Y-Richtung
- 8, 8': Anschlag Z-Richtung
- 9: Anlenkarm
- 10: Steckteil
- 11: Gehäusewand
- 12, 12': Flächenabschnitt
- 13: Befestigungsöffnung
- 14: Seitenfläche Steckteil
- 15: Durchgriff
- 16: Endprofil Stützglied
- 17: U-förmiger Abschnitt des Stützglieds
- 18: Elastomerabschnitt
- 19: Schwenknaht
- 20: Wandöffnung
- 21: Vorsprung

## Patentansprüche

1. Aggregatlager-Anordnung mit einem elastomeren Lagerkörper (2), welcher in einem zumindest an einer Seite mit einer Öffnung (3,3') versehenen, starren Lagergehäuse (4) aufgenommen ist, wobei durch die zumindest eine Öffnung (3, 3') wenigstens ein mit einem Aggregat verbundenes Stützglied (5) greift, welches sich an dem Lagerkörper (2) gegen das Lagergehäuse (4) abstützt, wobei durch Beaufschlagung der Anordnung verursachte Relativbewegungen des Lagerkörpers (2) gegenüber dem Lagergehäuse (4) entlang von drei zueinander orthogonalen Erstreckungsrichtungen (X, Y, Z) des Lagerkörpers (2) beidseits einer Ruhelage der jeweiligen Relativbewegung durch an dem Lagergehäuse (4) angeordnete Anschläge (6, 6, 7, 7', 8, 8') begrenzbar sind, wobei das Lagergehäuse (4) fügefrei ausgebildet ist und in einem Umformprozess einteilig zur Aufnahme des Lagerkörpers (2) gebildet ist, und wobei das Stützglied (5) einen U-förmigen Abschnitt (17) aufweist, dessen Schenkel in Ruhelage einer der Bewegungsrichtungen (Y) beidseits eines den Anschlag (7, 7') für diese Bewegungsrichtung (Y) bildenden Flächenabschnitts des Lagergehäuses (4) angeordnet sind, **dadurch gekennzeichnet, dass** der Anschlag (7, 7') zur Begrenzung der Bewegung in der einen Bewegungsrichtung (Y) an dem Lagergehäuse (4) aus Richtung des Aggregats gesehen in der einen Bewegungsrichtung (Y) vor dem Lagerkörper (2) angeordnet ist.

2. Aggregatlager-Anordnung nach Anspruch 1, **dadurch gekennzeichnet, dass** das Lagergehäuse (4) im Wesentlichen ein einen Durchgriff (15) bildendes Hohlprofil mit zwei gegenüberliegenden Öffnungen (3, 3') bildet, die insbesondere einen gleichen Querschnitt aufweisen und zwischen welchen sich eine Gehäusewand (11) des Lagergehäuses als Zarge erstreckt, die den Durchgriff (15) einfasst.

3. Aggregatlager-Anordnung nach Anspruch 2, **dadurch gekennzeichnet, dass** an der zumindest einen Öffnung (3, 3') des Lagergehäuses (4) zumindest ein Randbereich als wenigstens ein Flächenabschnitt (12, 12') ausgebildet ist, der gegenüber der Gehäusewand (11) des Lagergehäuses (4) an dieser angelenkt wenigstens bereichsweise ein- oder mehrfach dauerhaft verschwenkbar oder verschwenkt ist.

4. Aggregatlager-Anordnung nach Anspruch 3, **dadurch gekennzeichnet, dass** der wenigstens eine Flächenabschnitt (12, 12') als Teil eines Festlegemittels des Lagergehäuses (4) oder als Anschlag (6, 6', 7, 7', 8, 8') des Stützglieds (5) an dem Lagergehäuse (4) ausgebildet ist.

5. Aggregatlager-Anordnung nach einem der vorhergehenden Ansprüche, **dadurch gekennzeichnet, dass** dem Lagergehäuse (4) zumindest ein insbesondere U-förmiges Steckteil (10) zugeordnet ist, das mit seiner Basis und seinen Schenkeln in Gebrauchsstellung an drei Seiten des Lagergehäuses (4) zumindest über einen Teil der jeweiligen Seitenlänge anliegt.

6. Aggregatlager-Anordnung nach Anspruch 5, **dadurch gekennzeichnet, dass** wenigstens eine Seitenfläche (14) des Steckteils (10) eine Stirnfläche eines der verschwenkten Flächenabschnitte (12, 12') des Lagergehäuses (4) abstützt.

7. Aggregatlager-Anordnung nach einem der vorhergehenden Ansprüche, **dadurch gekennzeichnet, dass** das Stützglied (5) mit einer Steckrichtung entlang der Längsachse des Durchgriffs (15) des Lagergehäuses (4) in dieses eingreift.

8. Aggregatlager-Anordnung nach einem der vorhergehenden Ansprüche, **dadurch gekennzeichnet, dass** das Stützglied (5) an seinem dem Lagerkörper (4) zugewandten Ende ein Profil (16) aufweist, das den Lagerkörper (4) an zumindest drei Seiten angreift, wobei eine mittlere dieser Seiten entlang ihrer Erstreckungsrichtung vollständig übergriffen ist.

9. Aggregatlager-Anordnung nach einem der vorhergehenden Ansprüche, **dadurch gekennzeichnet, dass** der den Anschlag (7, 7') für die eine Bewegungsrichtung (Y) bildende Flächenabschnitt ein- oder mehrfach gefaltet ist und sich quer zur Gehäusewand (11) des Lagergehäuses (4) erstreckend in dessen Öffnung (3) ragt, durch welche das Stützglied (5) greift.

10. Aggregatlager-Anordnung nach einem der vorhergehenden Ansprüche, **dadurch gekennzeichnet, dass** mehrere der Anschläge (7, 7', 8) zur Begrenzung der Bewegung an dem Lagergehäuse (4) aus Richtung des Aggregats gesehen vor dem Lagerkörper (2) angeordnet sind.

11. Aggregatlager-Anordnung nach einem der vorhergehenden Ansprüche, **dadurch gekennzeichnet, dass** an der Gehäusewand (11) des Lagergehäuses (4) zumindest eine Wandöffnung (20) vorgesehen ist, in die ein mit dem Lagerkörper (2) verbundenes Befestigungselement zumindest eingreift.

## Claims

1. Engine mount arrangement with an elastomer mount body (2) which is received in a rigid mount housing (4) provided at least on one side with an opening (3, 3'), wherein at least one support member (5) connected to an engine engages through the at least one opening (3, 3'), which is supported on the mount body (2) against the mount housing (4), wherein relative movements of the mount body (2), caused by impact on the arrangement, with respect to the mount housing (4) along three extension directions (X, Y, Z) of the mount body (2) orthogonal to one another on both sides of a rest position of the respective relative movement are delimitable by stops (6, 6, 7, 7', 8, 8') arranged on the mount housing (4), wherein the mount housing (4) is formed without joints and is formed in a deformation process in one piece for receiving the mount body (2) and wherein the support member (5) has a U-shaped section (17), whose limbs are arranged in the rest position of one of the movement directions (Y) on both sides of a flat section of the mount housing (4) forming the stop (7, 7') for this movement direction (Y) **characterised in that** the stop (7, 7') to delimit the movement in one movement direction (Y) is arranged on the mount housing (4) viewed from the direction of the engine in one movement direction (Y) before the mount body (2).

2. Engine mount arrangement according to claim 1, **characterised in that** the mount housing (4) forms substantially a hollow profile, forming a passage (15), with two opposing openings (3, 3') which have in particular the same cross section and between which a housing wall (11) of the mount housing extends as a frame which surrounds the passage (15).

3. Engine mount arrangement according to claim 2, **characterised in that** at least one edge region is formed as at least one flat section (12, 12') on the at least one opening (3, 3') of the mount housing (4), which, with respect to the housing wall (11) of the mount housing (4), is permanently pivotable or pivoted, hinged on said housing wall, at least in sections once or multiple times.

4. Engine mount arrangement according to claim 3, **characterised in that** the at least one flat section (12, 12') is formed as part of a securing means of the mount housing (4) or as a stop (6, 6', 7, 7', 8, 8') of the support member (5) on the mount housing (4).

5. Engine mount arrangement according to any one of the preceding claims, **characterised in that** at least one in particular U-shaped insert part (10) is assigned to the mount housing (4) which rests with its base and its limbs in the position of use on three sides of the mount housing (4) at least over one part of the respective side length.

6. Engine mount arrangement according to claim 5, **characterised in that** at least one side surface (14) of the insert part (10) supports an end face of one of the pivoted flat sections (12, 12') of the mount housing (4).

7. Engine mount arrangement according to any one of the preceding claims, **characterised in that** the support member (5) engages with an insertion direction along the longitudinal axis of the passage (15) of the mount housing (4) into said mount housing.

8. Engine mount arrangement according to any one of the preceding claims, **characterised in that** the support member (5) has on its end facing the mount body (4) a profile (16) which engages the mount body (4) on at least three sides, wherein a central side of these sides is fully overlapped along its extension direction.

9. Engine mount arrangement according to any one of the preceding claims, **characterised in that** the flat section forming the stop (7, 7') for the one movement direction (Y) is folded once or multiple times and protrudes transverse to the housing wall (11) of the mount housing (4) extending into its opening (3), through which the support member (5) engages.

10. Engine mount arrangement according to any one of the preceding claims, **characterised in that** a plurality of stops (7, 7', 8) to delimit the movement are arranged on the mount housing (4) viewed from the direction of the engine before the mount body (2).

11. Engine mount arrangement according to any one of the preceding claims, **characterised in that** at least one wall opening (20) is provided on the housing wall (11) of the mount housing (4) into which a fastening element connected to the mount body (2) at least engages.

## Revendications

1. Disposition de palier d'agrégat avec un corps de palier en élastomère (2), qui est logé dans un boîtier de palier (4) rigide, muni d'une ouverture (3, 3') au moins sur un côté, moyennant quoi, à travers l'au moins une ouverture (3, 3') passe au moins un organe d'appui (5), relié avec un agrégat, qui s'appuie sur le corps de palier (2) contre le boîtier de palier (4), une sollicitation de la disposition permettant de limiter les mouvements relatifs du corps de palier (2) par rapport au boîtier de palier (4) le long de trois directions d'extension orthogonales entre elles (X, Y, Z) du corps de palier (2) des deux côtés d'une position de repos du mouvement relatif à l'aide de butées (6, 6', 7, 7', 8, 8') disposées sur le boîtier de palier (4), le boîtier de palier (4) étant conçu sans jointures et étant formé dans un processus de formage d'une seule pièce pour le logement du corps de palier (2) et l'organe d'appui (5) présentant une portion (17) en forme de U, dont les branches sont disposées, dans la position de repos d'une des directions de mouvement (Y), des deux côtés d'une portion de surface du boîtier de palier (4) constituant la butée (7, 7') pour cette direction de mouvement (Y), **caractérisée en ce que** la butée (7, 7') pour la limitation du mouvement est disposée, dans une direction de mouvement (Y), sur le boîtier de palier (4) avant le corps de palier (2), vue dans la direction de l'agrégat dans une direction de mouvement (Y).

2. Disposition de palier d'agrégat selon la revendication 1, **caractérisée en ce que** le boîtier de palier (4) constitue globalement un profilé creux formant un passage (15) avec deux ouvertures opposées (3, 3'), qui présentent plus particulièrement la même section transversale et entre lesquelles s'étend une paroi de boîtier (11) du boîtier de palier sous la forme d'un châssis, qui encadre le passage (15).

3. Disposition de palier d'agrégat selon la revendication 2, **caractérisée en ce que**, au niveau de l'au moins une ouverture (3, 3') du boîtier de palier (4), est formé au moins un bord, sous la forme d'au moins une portion de surface (12, 12'), qui peut être pivotée ou est pivotée durablement par rapport à la paroi de boîtier (11) du boîtier de palier (4), de manière articulée par rapport à celle-ci, au moins à certains endroits, en une ou plusieurs fois.

4. Disposition de palier d'agrégat selon la revendication 3, **caractérisée en ce que** l'au moins une portion de surface (12, 12') est conçue comme faisant partie d'un organe de fixation du boîtier de palier (4) ou comme une butée (6, 6', 7, 7', 8, 8') de l'organe d'appui (5) sur le boîtier de palier (4).

5. Disposition de palier d'agrégat selon l'une des revendications précédentes, **caractérisée en ce que**, au boîtier de palier (4) correspond au moins une partie d'emboîtement (10), plus particulièrement en forme de U, qui s'appuie, avec sa base et ses branches, dans la position d'utilisation, contre trois côtés du boîtier de palier (4) au moins sur une partie de la longueur latérale respective.

6. Disposition de palier d'agrégat selon la revendication 5, **caractérisée en ce qu'**au moins une surface latérale (14) de la partie d'emboîtement (10) soutient une face frontale de l'une des portions de surface (12, 12') pivotées du boîtier de palier (4).

7. Disposition de palier d'agrégat selon l'une des revendications précédentes, **caractérisée en ce que** l'organe d'appui (5) s'emboîte avec une direction d'emboîtement le long de l'axe longitudinal du passage (15) du boîtier de palier (4) dans celui-ci.

8. Disposition de palier d'agrégat selon l'une des revendications précédentes, **caractérisée en ce que** l'organe d'appui (5) comprend, au niveau de son extrémité orientée vers le corps de palier (4), un profilé (16) qui est en contact avec le corps de palier (4) au niveau d'au moins trois côtés, un côté central étant entièrement recouvert le long de sa direction d'extension.

9. Disposition de palier d'agrégat selon l'une des revendications précédentes, **caractérisée en ce que** la portion de surface constituant la butée (7, 7') pour une direction de mouvement (Y), est pliée une ou plusieurs fois et dépasse, en s'étendant transversalement par rapport à la paroi du boîtier (11) du boîtier de palier (4), dans son ouverture (3), à travers laquelle passe l'organe d'appui (5).

10. Disposition de palier d'agrégat selon l'une des revendications précédentes, **caractérisée en ce que** plusieurs des butées (7, 7', 8) pour la limitation du mouvement sont disposées sur le boîtier de palier (4), avant le corps de palier (2), vue dans la direction de l'agrégat.

11. Disposition de palier d'agrégat selon l'une des revendications précédentes, **caractérisée en ce que**, sur la paroi de boîtier (11) du boîtier de palier (4), est prévue au moins une ouverture de paroi (20) dans laquelle un élément de fixation relié avec le corps de palier (2) au moins s'emboîte.
